# EUROPEAN PATENT SPECIFICATION

(11) **EP 1 015 809 B1**
(45) Date of publication and mention of the grant of the patent: **02.11.2006**
(21) Application number: 97936707.5
(22) Date of filing: 19.08.1997
(51) Int. Cl.: G02B 6/00, G02B 1/04, G02B 6/02

(54) **LIGHT EMITTING CABLE OR SIMILAR BAND**
LICHTEMITTIERENDES KABEL ODER ÄHNLICHES BAND
CABLE ELECTROLUMINESCENT OU BANDE SIMILAIRE

(30) Priority: 19.08.1996 FI 963236; 11.10.1996 FI 964075
(43) Date of publication of application: 05.07.2000
(73) Proprietor: Kostron Oy, 39101 Hämeenkyrö (FI)
(72) Inventor: HONGISTO, Aatto, FIN-39130 Sasi (FI); PARHANKANGAS, Seppo, FIN-39200 Kyröskoski (FI)
(74) Representative: Nieminen, Taisto Tapani
(86) International application number: PCT/FI1997/000483
(87) International publication number: WO 1998/008024

(56) References cited:
- EP-A- 0 154 339
- WO-A-97/08490
- DE-A- 4 407 498
- US-A- 5 027 259
- US-A- 5 093 889

## Description

The invention relates to an optical fibre cable into which light from a light source is conducted and which emits the light mainly over its sides shaping herewith a flexible and illuminating cable or similar band.

Previously known from US PATENT 5,027,259 is a flexible cable emitting the light conducted into it over its side portions. The core of the cable is of PMMA plastic conducting light with high efficiency. By the shrinking method in using heat the core is furnished with a light-emitting cladding with hardly any negative impact on the cable flexibility. The most advantageous cladding material shrinked with heat is TEFLON, i.e. fluoresced ethylene propylene (FEP) with a shrinkage ratio of 1,3:1.

The disadvantage of the above construction is that the cover material must be shrinkable by heat. This limits the choise of cladding material and thus material with the best qualities cannot be selected. Out of question are materials which as cladding would have even better properties so that the cable could emit light from its side with high efficiency and have a great structural length and be bendable. A further disadvantage is that the produced interface of materials may open when the cable is being bent. Hazardous moisture can also get in into that point. In the printed German patent specifications DE 4007218 and DE 4104392 and in the US patent 5,093,889 optical fibre constructions are introduced, the cladding of which is of other plastic than the core and by means of which light is conducted as far as possible and with high efficiency.

In WO publication 97/08490 a cable emitting light from its side (Fig. 5 and 6) and has a core and a cladding, is introduced. Light can enter the cladding from the core only through certain spots which are of proper cladding material, otherwise there will be total reflection. Onto this cladding proper slanting surfaces are arranged so that the light beam refracts from said surface substantially crosswise in the cable and, accordingly, penetrates the cladding on the opposite side of the cable.

Document DE4407498A discloses a light emitting flexible element in accordance with the preamble of claim 1.

The above solution applies to a cable that emits ligth only from certain spots in the cable side and has been produced in arranging surfaces on those spots in the cable cladding to steer the refraction of light. With the solution one has aimed at long cable fittings for which light can be made sufficient thanks to partial illumination.

With an illuminating cable as per the present invention as defined by the appended claims, uniform discharge of light from the whole outer surfafe of the cable is produced, wherat the cable becomes an illuminating cable, rope or profile.

The advantages of this invention is that the cable becomes evenly illuminating only by using a simple homogenous cladding. It is possible to produce a great length for the cable, several metres (2-5 metres) in spite of radiation from the whole outer surface. The cable enables uninterrupted lighting of complicated figures shaped from the cable, whereat illumination works safely since the source of light can be placed at a distance from the figure. It is easy to furnish the illuminating cable with different colors, a portion of the cable can be "dark", another illuminating. The cable can be so made that the main portion of in-fed light comes out from the cable side. Light can be fed in from cable both ends or one end of the cable can, for instace, be a reflecting plug sending back the beams that have reached the cable end.

Additional advantages are the possibility to adjust the pigment concentration of the surface material in the stage of extrusion and that extrusion is an economic and favourable way of producing the cladding. Thanks to extrusion that kind of interface between the core and the cladding is formed, where both total reflection, whereat the beams continue their travel, and refraction, whereat the beams come out thorugh the cable side are produced. The ratio of refracting and reflecting beams is well applicable especially by using extrusion materials as per this invention.

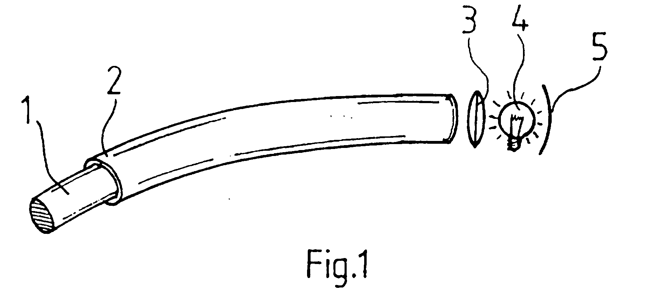

In the following the invention is disclosed with reference to figure 1 of the enclosed drawing showing the illuminating cable.

Fig. 1 is an assembly in cable 1,2 end including a light source 4, for instance a LED, a lens 3, and a mirror 5 for conduction of light into the cable. As to its material the cable core 1 is a high-translucent flexible circular plastic rod, in itself known as acrylic plastic, for instance PMMA or similar synthetic material. Most advantageously the diameter of core 1 ranges from 3 to 10 mm, whereat bending works well even with a small radius. Most advantageously the cross-section of core 1 is circular but it can also be a flat band, a hollow tube or another required form or profile. The light travels in the cable core 1 almost parallel to the core and hits the interface of core material 1 and cladding material in a small angle. Since the core material is arranged selecting a material with an optically greater density than the cladding material, the light is reflected mainly totally and can continue its travel in the core material. This occurs, for instance, at shrinking the cladding film onto the core.

In the invention one can make the cable to emit light, i.e. to illuminate the environment by extruding material as per the invention onto core 1, the material being to its qualities surprisingly better than prior FEP material applied by shrinking and presented in US patent 5,027,259. By extrusion between core and cladding an interface is produced reducing the share of total reflection beams. Then a substantially greater share of beams can enter the cladding than for instance from an interface produced by shrinking.

The material as per the invention is included in the group of fluoroplastics. From this group good results have been reached by PVDF i.e. polyvinylidene fluoride materials either as such or mixed with some pigment concentration. This cladding is applied on core 1 either by extrusion when the core is manufactured or later. By means of pigments colors or improved scattering are produced.

An advantageous quality of the cladding material would also be light scattering even without mixtures.

With different pigment concentrations, for instance 4%or 8% BaSo4 additions, it is possible to adjust the scattering properties of light from cladding 2 as well as the distribution of light. Other pigments can be added too, as for instance titanium oxide.Pigments are added also in order to produce colors for the light emitted by cladding 2. In the matrix plastic there can also be particles to intensify light scattering.

When the light travelling in core material 1 hits the interface at greater angles than the critical angle, there will be no total reflection but the light arrives at the cladding layer, where it is efficiently scattered. Between cladding material 2 and the ambient medium, air for instance, there is also an optical interface, where total reflection may occur. Then the light will not come direct out from the side but travels on in the cladding material still scattering. Light absorption of cladding material 2 shall be scarce in order to achieve sufficient intensity and uniformity of scattered light. The applicable value of the refraction coefficient of the cladding material light is under 1,45 so that the illumination quality of the side portion would be the one required.

From cladding 2 strength against environmental stresses and easy cleansability are required in addition to light technical qualitities. The cladding is forced by melting on the core surface either covering the core by extrusion or extrusing the layers simultaneously or covering the core surface by die casting.

In one end of the illuminating cable 1,2 it is advantageous to install a reflecting surface if light is not conducted into the cable from both ends. There can be a cladding 2 only on that cable portion which one wants to be illuminating.

An illuminating cable according to the invention can be bent in heating the bending point. When the cable has been cooled it is relatively stiff and suitable for shaping figures, digits and letters. Boards, corresponding shields or advertisements made in this way are safe in use, since in the figure itself there is no electricity, no fragile glass tubes and the rise of the cable temperature due to the ligth beams is not even worth mentioning.

## Claims

1. Light emitting flexible element, a cable or similar elongated hollow or solid rod, through the end of which light from a light source (4) is conducted into a light emitting core (1) in the cable and around which core there is a translucent cladding (2) emitting the light conducted into the core mainly through its wall in order to turn the cable into an illuminating band, profile or similar, and in order to make the cable outer surface illuminate evenly by means of the homogenous cladding (2), the cladding (2), made of fluoric plastic, most suitable PVDF material, is forced by extrusion onto core (1), **characterized in that** said elected cladding (2) has refraction coefficient 1,45 or smaller and contains pigments.

2. A cable according to claim 1, **characterized in that** the cladding (2) is made of light-scattering material (1).

## Patentansprüche

1. Ein Lichtstrahlendes biegsames Element, wie ein Kabel oder ein ähnliches hohles oder geschlossenes Rohr, durch dessen Ende Licht aus Lichtquelle (4) in einen Kern (1) im Kabel geleitet wird, und es rund diesem Kern eine durchsichtige Umhüllung (2) gibt, die das in den Kern geleitete Licht hauptsächlich durch seine wände strahlt, um den Kabel zu einem leuchtenden Band, Profil oder ähnliches zu formieren, und um die äußere Fläche des Kabels gleichmäßig beleuchtend mit Hilfe der homogenen Umhüllung (2) zu machen, ist Umhüllung (2) eine auf die Fläche des Kerns (1) zu zwingende Fluorplastik, am günstigsten PVDF oder ähnliches Material, **gekennzeichnet dadurch, dass** der erwähnte gewählte Umhüllung (2) einen Brechungskoeffizient von 4, 5 oder kleiner hat, und Pigmente enthält.

2. Ein Kabel gemäss Anspruch 1, **gekennzeichnet dadurch, dass** Umhüllung (2) aus streuendem Material besteht.

## Revendications

1. Un élément flexible émettant une lumière, tel un câble ou une tige solide ou creuse de forme allongée, par l'extrémité duquel la lumière provenant d'une source de lumière (4) est conduite dans le noyau (1) émetteur de la lumière situé à l'intérieur du câble, le noyau étant entouré d'une gaine (2) translucide transmettant, à travers sa paroi, la lumière conduite dans le noyau, afin de transformer le câble en une bande, un profilé ou élément similaire capable d'éclairer et afin que la surface extérieur du câble transmette une lumière uniforme au moyen d'une gaine (2) homogène, cette gaine (2) étant de plastique fluoré, préférablement de matériau PVDF, et étant forcée par extrusion sur le noyau (1), **caractérisé en ce que** ladite gaine (2) a un coefficient de réfraction de 1,45 ou inférieur et contient des pigments.

2. Un câble selon la revendication 1, **caractérisé en ce que** la gaine (2) est faite d'un matériau dispersant la lumière (1).
